# FASCICULE DE BREVET EUROPEEN

(11) **EP 2 839 546 B1**
(45) Date de publication et mention de la délivrance du brevet: **04.07.2018**
(21) Numéro de dépôt: 13715238.5
(22) Date de dépôt: 11.04.2013
(51) Int. Cl.: H01R 13/213, H01R 13/533

(54) **SYSTÈME DE CONNEXION MONOVOIE RAPIDE**
SCHNELLES EINWEGVERBINDUNGSSYSTEM
QUICK ONE-WAY CONNECTION SYSTEM

(30) Priorité: 17.04.2012 FR 1253542
(43) Date de publication de la demande: 25.02.2015
(73) Titulaire: SOURIAU, 78000 Versailles (FR)
(72) Inventeur: MEL, Christophe, F-77380 Combs La Ville (FR); THIERRY, Philippe, F-92130 Issy Les Moulineaux (FR); GAZELOT, Yves, F-77170 Brie Comte Robert (FR)
(74) Mandataire: Ipside
(86) Numéro de dépôt international: PCT/EP2013/057634
(87) Numéro de publication internationale: WO 2013/156393

(56) Documents cités:
- DE-A1-102007 063 207
- FR-A1- 2 270 695
- FR-A5- 2 109 112

## Description

### Domaine de l'invention

L'invention concerne un système de connexion rapide pour connecteurs monovoies, comportant un module central apte à recevoir et à mettre en liaison électrique deux éléments de connexion. Ce système permet une connexion rapide des deux éléments de connexion monovoies par une installation indépendante de chacun des éléments à l'intérieur du même module central.

L'invention trouve des applications dans tous les domaines de la connectique et, en particulier, dans le domaine de la connectique en environnement sévère comme la connectique nucléaire.

### Etat de la technique

Dans le domaine de la connectique, un système de connexion classique comporte généralement un connecteur mâle et un connecteur femelle contenant chacun un ou plusieurs contacts électriques destinés à s'accoupler les uns aux autres pour assurer une conduction électrique. Dans le cas de connecteurs monovoies, le connecteur mâle et le connecteur femelle comportent chacun un seul contact électrique monté à l'extrémité d'un câble électrique. Le connecteur mâle monovoie est muni, à l'extrémité du câble électrique, d'une broche. Le connecteur femelle monovoie est muni, à l'extrémité du câble électrique, d'une douille apte à recevoir la broche du connecteur mâle. Le document FR2109112 divulgue un système de connexion monovoie rapide de l'art antérieur. En milieu nucléaire, par exemple dans une centrale nucléaire, le raccordement de deux connecteurs doit être rapide et efficace afin de limiter la présence des opérateurs en zone sensible. En outre, dans ce milieu nucléaire, les systèmes de connexion doivent être étanches afin de protéger les contacts électriques de façon à garantir la liaison électrique dans des conditions environnementales accidentelles.

Actuellement, il est connu d'utiliser, dans les centrales nucléaires, des harnais câblés permettant le raccordement de plusieurs équipements électriques les uns avec les autres via des connexions monovoies. Ces harnais sont équipés d'un ou de plusieurs systèmes de connexion permettant de connecter un connecteur monovoie mâle avec un connecteur monovoie femelle.

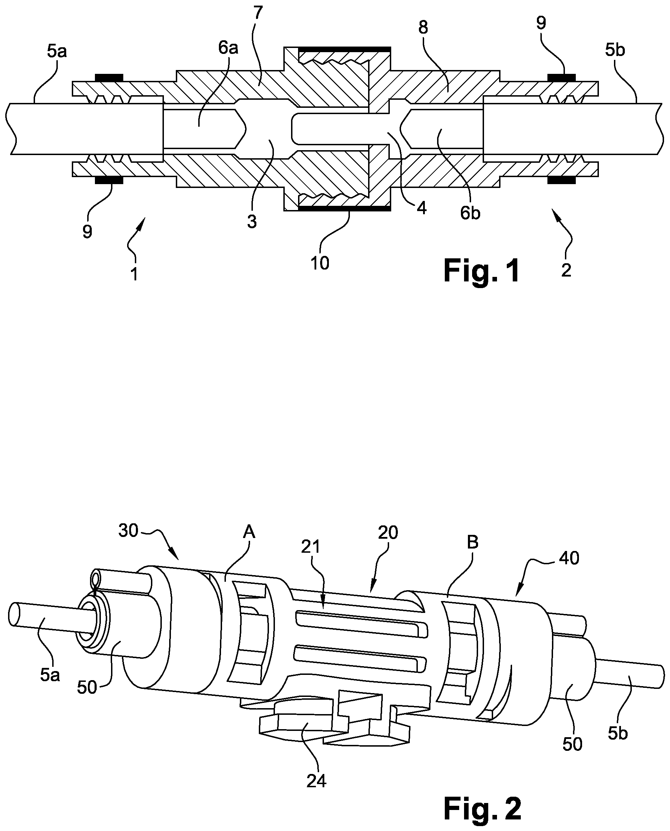

Un exemple d'un système de connexion connu dans le domaine de la connectique nucléaire est représenté sur la figure 1. Ce système de connexion comporte un élément de connexion mâle 2, ou connecteur monovoie mâle, et un élément de connexion femelle 1, ou connecteur monovoie femelle. L'élément de connexion femelle 1 comporte une douille 3 fixée à l'extrémité dénudée 6a d'un câble électrique 5a. L'élément de connexion mâle 2 comporte une broche 4 fixée à l'extrémité dénudée 6b d'un câble électrique 5b.

L'élément de connexion mâle 2 est monté dans un premier boitier de connexion 8. L'élément de connexion femelle 1 est monté dans un second boitier de connexion 7. Les boitiers de connexion 7 et 8 ont des formes complémentaires l'une de l'autre de sorte que l'un des boitiers de connexion puisse s'emboiter partiellement à l'intérieur de l'autre boitier de connexion. Dans le système de connexion de la figure 1, le premier boitier de connexion 8 est apte à recevoir le second boitier de connexion 7, les deux boitiers s'emboitant partiellement l'un dans l'autre pour assurer un verrouillage des deux éléments de connexion 1 et 2.

Dans le système de connexion représenté sur la figure 1, les câbles 5a et 5b sont fixés, respectivement, dans le second boitier de connexion 7 et dans le premier boitier de connexion 8 au moyen de mâchoires de fixation 9, appelées aussi serre-fils, qui assurent en outre l'étanchéité entre le câble et le boitier de connexion.

Dans ce système, chaque câble électrique, équipé d'une broche ou d'une douille, est monté dans un boitier de connexion. Au moment de l'installation du système de connexion, les deux boitiers de connexion sont emboités l'une dans l'autre. Une bague de verrouillage 10 peut ensuite être glissée autour de la zone des boitiers de connexion se chevauchant.

Un tel système de connexion induit, dans son utilisation, la manipulation simultanée des deux boitiers de connexion dont la liaison mécanique définitive est assurée par l'adjonction d'un élément de verrouillage externe au dispositif.

### Exposé de l'invention

L'invention a pour but de proposer un système pouvant remplacer efficacement le système connu décrit précédemment et présentant des avantages par rapport à ce système connu. L'invention présente notamment l'avantage de permettre une manipulation indépendante des deux boitiers de connexion et d'assurer instantanément le verrouillage desdits boitiers, simplifiant les opérations de raccordement électrique sur site. En outre, une intervention sur un seul boitier est possible sans avoir à démonter l'ensemble du dispositif de connexion, ce qui apporte une plus grande souplesse dans l'utilisation du dispositif.

Pour cela, l'invention propose un système de connexion monovoie comportant un module central apte, d'une part, à recevoir un élément de connexion mâle sur une face et un élément de connexion femelle sur une autre face et, d'autre part, à aligner l'élément de connexion mâle avec l'élément de connexion femelle afin d'établir une liaison électrique entre les deux éléments de connexion.

De façon plus précise, l'invention concerne un système de connexion monovoie comportant un élément de connexion femelle et un élément de connexion mâle, l'élément de connexion femelle comportant un contact femelle monté à une extrémité d'un premier câble électrique, l'élément de connexion mâle comportant un contact mâle monté à une extrémité d'un second câble électrique. Ce système est caractérisé par le fait qu'il comporte un module central monobloc muni d'un trou traversant longitudinal et apte à recevoir, sur une première face, l'élément de connexion femelle et, sur une seconde face, l'élément de connexion mâle de sorte que le contact mâle de l'élément de connexion mâle soit aligné avec le contact femelle de l'élément de connexion femelle pour assurer une liaison électrique entre les deux éléments de connexion.

Ce système a l'avantage de permettre une installation facile des éléments de connexion dans le module central, par simple coulissement. De plus, dans le système selon l'invention, le module central comporte une partie centrale sensiblement tubulaire, reliant une première face munie de découpes et une seconde face, identique à la première face. Un tel module a l'avantage d'être symétrique, ce qui permet de connecter l'élément de connexion mâle sur n'importe laquelle des faces dudit module. Le système de connexion de l'invention peut comporter une ou plusieurs caractéristiques suivantes :
- chaque face du module central comporte au moins une découpe latérale et une découpe frontale destinées à recevoir un élément de verrouillage.
- l'élément de connexion femelle et l'élément de connexion mâle comportent chacun un boitier isolant abritant un contact électrique, respectivement femelle et mâle, ce boitier isolant étant apte à s'insérer partiellement dans une des faces du module central.
- le boitier isolant de l'élément de connexion mâle et le boitier isolant de l'élément de connexion femelle sont identiques. De cette façon, lorsque les éléments de connexion mâle et femelle sont montés dans le module central, les contacts mâle et femelle se trouvent nécessairement alignés.
- le boitier isolant comporte :
   - une partie externe traversée par le câble électrique,
   - une partie de verrouillage munie d'au moins un élément de verrouillage prévu pour s'introduire dans la découpe frontale et la découpe latérale du module central,
   - une barrière d'étanchéité assurant l'étanchéité du contact mâle ou femelle à l'intérieur du module central,
   - une partie interne de protection du contact mâle ou femelle.
- le boitier isolant comporte une partie tubulaire apte à recevoir et maintenir le câble électrique, cette partie tubulaire étant sertie autour dudit câble au moyen d'un collier de serrage. Ce sertissage assure l'étanchéité du câble électrique à l'intérieur du boitier isolant et le maintien mécanique définitif du contact électrique équipé de son câble.
- le module central comporte des moyens de fixation assurant la fixation dudit module central sur un rail extérieur.
- le système comporte au moins un capuchon de protection apte à être installé partiellement autour du boitier isolant de l'élément de connexion mâle ou femelle pour protéger le contact mâle ou femelle avant installation de l'élément de connexion dans le module central.
- le capuchon de protection comporte au moins une découpe frontale et une découpe latérale destinées à recevoir l'élément de verrouillage du boitier isolant.
- le module central est réalisé en thermoplastique moulé.
- le boitier isolant est moulé dans un élastomère.

L'invention concerne également un harnais câblé pour la connexion d'équipements électriques. Ce harnais est caractérisé par le fait qu'il comporte au moins un système de connexion tel que décrit précédemment.

### Brève description des dessins

Les figures suivantes sont représentées à titre illustratif mais nullement limitatif de l'invention.
La figure 1, déjà décrite, représente un système de connexion monovoie connu.
La figure 2 représente une vue de profil d'un système de connexion selon l'invention.
La figure 3 représente le module central du système de connexion de l'invention.
La figure 4 représente un boitier de connexion avec contact mâle du système de l'invention.
La figure 5 représente un contact mâle en cours d'insertion dans le boitier de connexion.
La figure 6 représente un boitier de connexion avec contact femelle du système de l'invention.
La figure 7 représente un boitier de connexion du système de l'invention, équipé d'un capuchon de protection.
Les figures 8A, 8B et 8C représentent plusieurs étapes d'insertion d'un boitier de connexion dans le module central du système de l'invention.
Les figures 9A et 9B représentent des exemples de montage du système de l'invention sur un rail.

### Description détaillée de modes de réalisation de l'invention

L'invention concerne un système de connexion monovoie permettant une connexion facile et rapide des éléments de connexion mâle et femelle ensemble. Un exemple de ce système de connexion est représenté sur la figure 2.

Ce système de connexion comporte un module central 20 destiné à recevoir un élément de connexion mâle 30 et un élément de connexion femelle 40, qui seront décrits de façon plus détaillée par la suite. L'élément de connexion mâle 30 est installé dans le module central 20 par une face A dudit module. L'élément de connexion femelle 40 est installé dans le module central 20 par une face B dudit module.

L'élément de connexion mâle 30 reçoit un câble électrique 5a équipé préalablement d'une broche 31. L'élément de connexion femelle 40 reçoit un câble électrique 5b équipé préalablement d'une douille 61. Chaque câble électrique 5a, 5b est introduit dans l'élément de connexion jusqu'au clipsage en position du contact, puis fixé au moyen d'un collier de serrage 50.

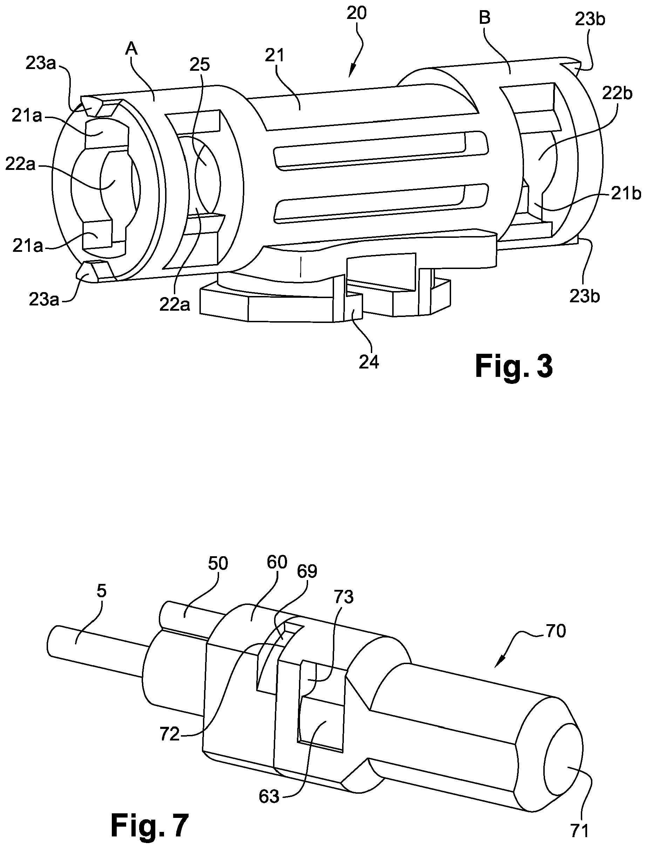

Comme représenté sur la figure 3, le module central 20 est un élément monobloc réalisé par moulage dans un matériau de type thermoplastique. Ce module central 20 a une forme sensiblement cylindrique comportant une partie centrale 21 terminée par une première face A et une seconde face B. Ces faces A et B constituent les parties d'extrémité du module central 20.

Le module central 20 comporte un orifice traversant 25, longitudinal, reliant la partie d'extrémité A et la partie d'extrémité B via la partie centrale 21. La partie d'extrémité A comporte des découpes latérales 22a et des découpes frontales 21a. La partie d'extrémité B comporte des découpes latérales 22b, et des découpes frontales 21b, ces découpes 22b et 21b étant identiques, respectivement, aux découpes 22a et 21a de la partie d'extrémité A. Le module central 20 est ainsi un élément parfaitement symétrique pouvant recevoir un élément de connexion mâle et un élément de connexion femelle sur l'une ou l'autre de ses faces, sans distinction.

Les découpes frontales 21a, 21b et les découpes latérales 22a, 22b sont destinées à recevoir chacune, partiellement, l'élément de connexion mâle ou l'élément de connexion femelle. Comme décrit plus en détail par la suite, les éléments de connexion comportent chacun un boitier de connexion, ou boitier isolant, dont la forme est adaptée pour être insérée partiellement dans l'orifice traversant 25 de la partie centrale 21 et partiellement dans les découpes latérales 22a, 22b et frontales 21a, 21b des parties d'extrémités A et B.

Chaque partie d'extrémité A et B du module central 20 comporte en outre des butées frontales 23a, 23b formant chacune une excroissance sur la face des dites parties d'extrémité A et B. Ces butées frontales 23a, 23b ont pour fonction de sécuriser la fin de course du verrouillage des éléments de connexion mâle et femelle dans le module central 20 et de freiner leur déverrouillage, comme cela sera expliqué par la suite.

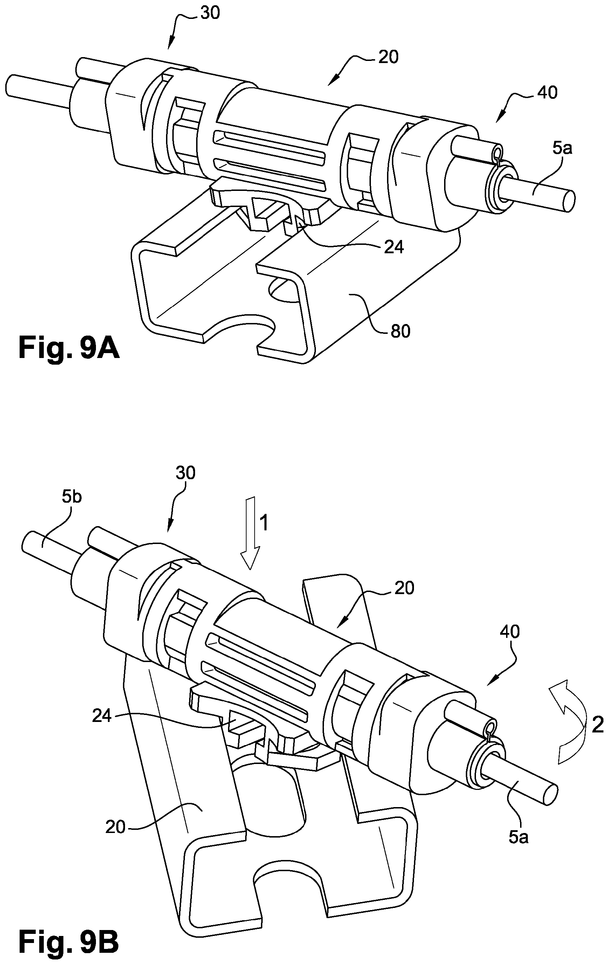

Le module central 20 peut comporter, en outre, des moyens de fixation 24 dudit module central sur un dispositif extérieur tel qu'un rail. Ces moyens de fixation 24 peuvent avoir une section en forme de T destinée à coulisser le long d'un rail ou à recevoir un élément de fixation tel qu'une vis ou un écrou, comme cela sera expliqué plus en détail en référence aux figures 9A et 9B.

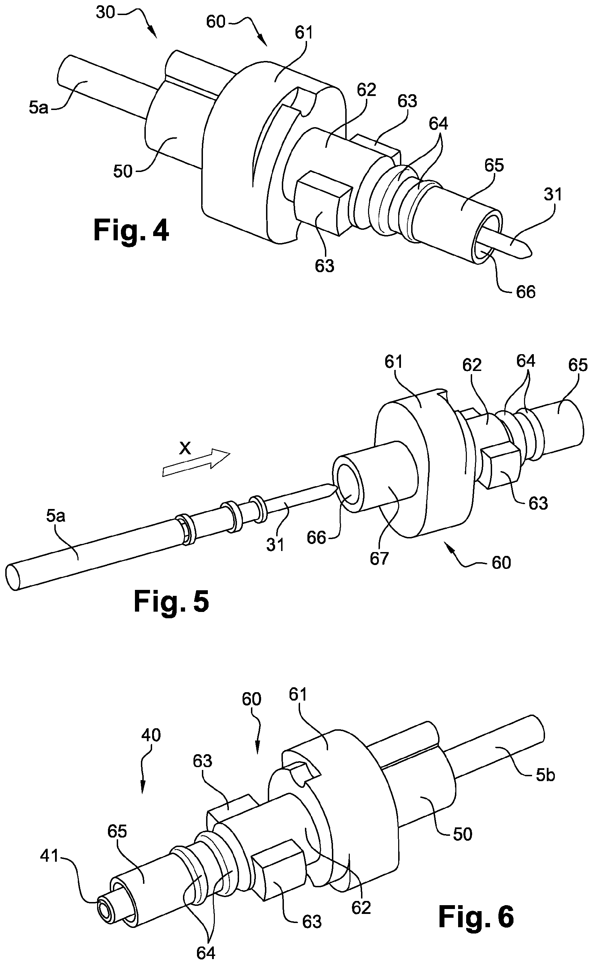

Le système de l'invention comporte également des éléments de connexion tels que représentés sur les figures 4 à 6. En particulier, les figures 4 et 5 représentent un élément de connexion mâle, tandis que la figure 6 représente un élément de connexion femelle.

L'élément de connexion mâle 30 comporte un boitier de connexion 60, ou boitier isolant, réalisé par moulage dans un matériau isolant tel que de l'élastomère. Il comporte en outre un contact mâle constitué d'une broche 31 montée à l'extrémité du câble électrique 5a.

Le boitier isolant 60 comporte un trou traversant 66 destiné à recevoir l'extrémité du câble électrique 5a avec sa broche 31. La figure 5 montre justement la broche 31 du contact mâle, clipsée à l'extrémité du câble électrique 5a et en cours d'installation dans le trou traversant 66 du boitier isolant 60. La broche 31 traverse le trou 66 et se clipse dans sa position longitudinale définitive. Le démontage et remontage du contact reste donc possible. L'élément de connexion mâle se trouve monté, comme représentée sur la figure 4.

La figure 4, comme la figure 5, montrent en détail le boitier isolant 60. Ce boitier isolant 60 comporte différentes parties listées ici suivant la direction X de montage :
- une partie tubulaire 67 est prévue pour recevoir et maintenir le câble électrique 5a ;
- une partie externe 61 est prévue, après montage de l'élément de connexion dans le module central, pour être en contact avec l'extérieur de la partie d'extrémité A ou B dudit module central ;
- une partie de verrouillage 62, de forme tubulaire est munie d'au moins un élément de verrouillage. De préférence, la partie de verrouillage 62 est munie de deux éléments de verrouillage 63 diamétralement opposés. Cette partie de verrouillage 62 est destinée à être introduite dans une partie d'extrémité A ou B du module central. Les éléments de verrouillage 63 sont prévus pour s'introduire dans les découpes frontales 21a ou 21b et les découpes latérales 22a ou 22b du module central 20.
- une barrière d'étanchéité 64, constituée par deux lèvres successives, assure l'étanchéité du contact mâle 31 (broche) à l'intérieur du module central ;
- une partie interne 65, de forme tubulaire, protège le contact mâle.

Sur la figure 6, on a représenté un élément de connexion femelle 40. On notera que l'élément de connexion femelle 40 est fortement ressemblant à l'élément de connexion mâle 30. En effet, l'élément de connexion femelle 40 comporte un boitier de connexion 60, ou boitier isolant, strictement identique au boitier isolant 60 de l'élément de connexion mâle 30. L'élément de connexion femelle 40 diffère donc de l'élément de connexion mâle 30 uniquement pas le type de contact. En effet, le boitier isolant 60 de l'élément de connexion femelle 40 abrite un contact femelle 41 du type douille. Ce contact femelle 41 est fixé, par clips, à l'extrémité du câble électrique 5b.

Comme expliqué précédemment pour l'élément de connexion mâle, une extrémité du câble électrique 5b équipée d'une douille 41 est introduite pas coulissement dans le trou traversant 66 du boitier isolant 60 jusqu'à ce que la douille 41 ressorte à l'autre extrémité du trou traversant 66. Qu'il s'agisse du contact mâle (câble électrique avec broche) ou du contact femelle (câble électrique avec douille), le contact électrique est introduit dans le boitier isolant 60 à l'aide d'un outil de montage classique jusqu'à un clipsage. Ce clipsage assure le maintien du contact mâle ou femelle à l'intérieur du boitier isolant. Un collier de serrage 50 est ensuite serti autour de la partie tubulaire 67 du boitier isolant 60 pour assurer le maintien mécanique du câble électrique 5 dans ledit boitier isolant. Ce collier de serrage 50, identique quelque soit le type de contact (mâle ou femelle), assure également l'étanchéité de l'extrémité du câble électrique dans le boitier isolant.

Une fois l'élément de connexion mâle ou femelle monté, comme expliqué précédemment, un capuchon peut être installé partiellement autour du boitier isolant afin de protéger le contact mâle ou femelle avant installation de l'élément de connexion dans le module central. Un exemple d'un tel capuchon de protection est représenté sur la figure 7. Ce capuchon, référencé 70, peut avoir une forme sensiblement cylindrique, conique ou à double cylindre, fermée à une de ses extrémités 71. L'extrémité non fermée 72 a une forme adaptée au contour de la partie de verrouillage 62 du boitier isolant 60 afin de pouvoir s'emboiter autour dudit boitier isolant. Pour assurer un verrouillage du capuchon 70 sur l'élément de connexion 30 ou 40, l'extrémité non fermée 72 du capuchon a une forme identique à la forme des parties d'extrémité A et B du module central 20. En particulier, l'extrémité non fermée 72 du capuchon comporte des découpes frontales et latérales, une des découpes latérales 73 étant visible sur la figure 7.

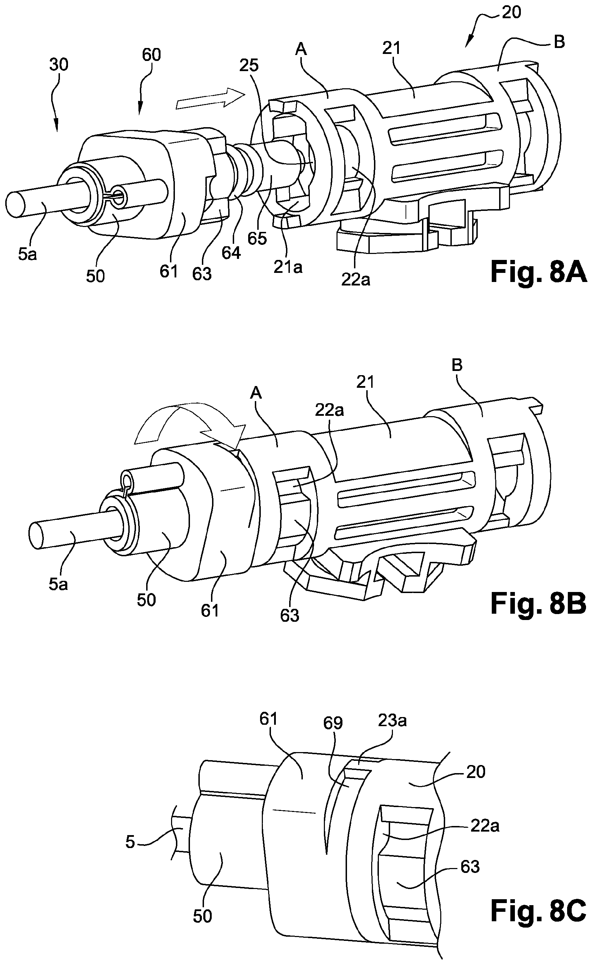

Les figures 8A, 8B et 8C montrent différentes étapes de l'installation d'un élément de connexion mâle 30 dans un module central 20, étant entendu que l'installation d'un élément de connexion femelle est tout à fait identique. Dans ces exemples, l'élément de connexion 30 est installé sur la face A du module central 20. La figure 8A montre l'élément de connexion 30 lorsque la partie interne 65 du boitier isolant 60 est insérée dans l'orifice 25 de la face A du module central 20, les éléments de verrouillage 63 faisant face aux découpes frontales 21a de la face A dudit module. L'insertion de cet élément de connexion est obtenue par un mouvement translatif représenté par une flèche rectiligne. L'élément de connexion 30 est totalement inséré dans le module central 20 lorsque la butée 23a entre en contact avec la partie externe 61 du boitier isolant, comme montré sur la figure 8C. Dans cette position, la barrière d'étanchéité 64 est en appui contre la paroi interne du module central, assurant l'étanchéité du contact électrique à l'intérieur dudit module central.

La figure 8B montre l'étape de verrouillage de l'élément de connexion 30 dans le module central 20. En effet, lorsque l'élément de connexion 30 est inséré dans le module central 20 et que la butée 23a dudit module est en contact mécanique avec la partie externe 61 du boitier isolant, alors un mouvement de rotation, schématisé par une flèche courbe, permet de faire pivoter l'élément de verrouillage 63 de la découpe frontale vers la découpe latérale 22a du module central. Lorsque l'élément de verrouillage 63 est emboité dans la découpe latérale 22a du module central, alors l'élément de connexion est verrouillé à l'intérieur dudit module central.

Une encoche 69 réalisée en surface de la partie externe 61 constitue une butée d'anti déverrouillage, la paroi de ladite encoche 69 bloquant le mouvement de rotation du boitier isolant 60.

On comprend de ce qui précède qu'un élément de connexion mâle 30 peut être monté et verrouillé dans une face A du module central 20. Parallèlement, un élément de connexion femelle 40 peut être monté et verrouillé dans la face B du module central 20, comme montré sur la figure 2. Les boitiers isolants de l'élément de connexion mâle et de l'élément de connexion femelle étant identiques, le contact mâle et le contact femelle se trouvent parfaitement alignés. La broche 31 de l'élément de connexion mâle 30 et la douille 41 de l'élément de connexion femelle 40 sont alors connectés, assurant ainsi une liaison électrique entre les câbles électriques 5a et 5b.

Le système de l'invention permet donc une installation facile de chacun des éléments de connexion mâle ou femelle puisqu'un mouvement translatif et un mouvement rotatif suffisent à cette installation. Cette installation peut être encore facilitée dès lors que le module central 20 est fixé. Pour cela, le module central de l'invention comporte des moyens de fixation 24 montés sur la partie centrale 21 dudit module. Ces moyens de fixation peuvent prendre différentes formes. Ils peuvent, en particulier, former une glissière ouverte, comme montré sur les figures 9A et 9B. Cette glissière peut avoir une section en forme de T. Une telle glissière offre l'avantage de pouvoir être glissée autour d'un rail, ce qui permet de fixer le module central sur le rail. Elle offre également l'avantage d'être apte à recevoir un élément de fixation du type vis ou écrou. Elle peut ainsi être glissée à l'intérieur d'un rail normalisé 80 et maintenue par un système de serrage externe, comme dans l'exemple de la figure 9A, de sorte que le module central 20 soit en parallèle avec d'autres modules centraux. Comme montré sur la figure 9B, elle offre l'avantage supplémentaire de pouvoir être introduite dans une ouverture du rail 80 avec une orientation angulaire particulière, puis pivotée à l'intérieur dudit rail 80 pour être verrouillée perpendiculairement à ce rail.

Lorsque le module central est fixé sur un rail ou sur toute autre structure extérieure au système, on comprend qu'il est facile de mettre en place les éléments de connexion femelle et mâle de part et d'autre du module central.

## Revendications

1. Système de connexion monovoie comportant un élément de connexion femelle (40) et un élément de connexion mâle (30), l'élément de connexion femelle comportant un contact femelle (41) monté à une extrémité d'un premier câble électrique (5b), l'élément de connexion mâle comportant un contact mâle (31) monté à une extrémité d'un second câble électrique (5a), comportant en outre un module central (20) monobloc muni d'un trou traversant (25) longitudinal et apte à recevoir, sur une première face (A), l'élément de connexion mâle et, sur une seconde face (B), l'élément de connexion femelle de sorte que le contact mâle de l'élément de connexion mâle soit aligné avec le contact femelle de l'élément de connexion femelle pour assurer une liaison électrique entre les deux éléments de connexion (30, 40), **caractérisé en ce que** le module central (20) comaaporte une partie centrale (21) sensiblement tubulaire, reliant la première face (A), laquelle est munie de découpes, et la seconde face (B), identique à la première face.

2. Système de connexion selon la revendication 1, dans lequel chaque face (A, B) du module central (20) comporte au moins une découpe latérale (22a, 22b) et une découpe frontale (21a, 21b) destinées à recevoir un élément de verrouillage.

3. Système de connexion selon l'une quelconque des revendications 1 ou 2, dans lequel l'élément de connexion femelle (40) et l'élément de connexion mâle (30) comportent chacun un boitier isolant (60) abritant un contact électrique, respectivement femelle (41) et mâle (31), ce boitier isolant étant apte à s'insérer partiellement dans une des faces du module central (20).

4. Système de connexion selon la revendication 3, dans lequel le boîtier isolant (60) de l'élément de connexion mâle (30) et le boîtier isolant (60) de l'élément de connexion femelle (40) sont identiques.

5. Système de connexion selon la revendication 3 ou la revendication 4, dans lequel le boîtier isolant (60) comporte :
- une partie externe (61) traversée par le câble électrique,
- une partie de verrouillage (62) munie d'au moins un élément de verrouillage prévu pour s'introduire dans la découpe frontale et la découpe latérale du module central,
- une barrière d'étanchéité (64) assurant l'étanchéité du contact mâle ou femelle à l'intérieur du module central,
- une partie interne (65) de protection du contact mâle ou femelle.

6. Système de connexion selon la revendication 4 ou la revendication 5, dans lequel le boitier isolant (60) comporte une partie tubulaire (67) apte à recevoir et maintenir le câble électrique, cette partie tubulaire étant sertie autour dudit câble au moyen d'un collier de serrage (50).

7. Système de connexion selon l'une quelconque des revendications 1 à 6, dasn lequel le module central (20) comporte des moyens de fixation (24) assurant la fixation dudit module central sur un rail extérieur.

8. Système de connexion selon l'une quelconque des revendications 3 à 7, comportant au moins un capuchon de protection (70) apte à être installé partiellement autour du boitier isolant (60) de l'élément de connexion mâle ou de l'élément de connexion femelle pour protéger le contact mâle ou femelle, avant l'installation de l'élément de connexion dans le module central.

9. Système de connexion selon les revendications 7 et 8, dans lequel le capuchon de protection (70) comporte au moins une découpe frontale et une découpe latérale (73) destinées à recevoir l'élément de verrouillage du boitier isolant.

10. Système de connexion selon l'une quelconque des revendications 1 à 9, dans lequel le module central est réalisé en thermoplastique moulé.

11. Système de connexion selon l'une quelconque des revendications 3 à 10, dans lequel le boitier isolant est moulé dans un élastomère.

12. Harnais câblé pour la connexion d'équipements électriques, **caractérisé en ce qu'**il comporte au moins un système de connexion selon l'une quelconque des revendications 1 à 11.

## Patentansprüche

1. Einwegiges Verbindungselement mit einer Verbindungsbuchse (40) und einem Verbindungsstecker (30), wobei die Buchse einen Kontaktfassung enthält (41), die sich am Ende des ersten Elektrokabels befindet (5b), und der Stecker einen Kontaktstift enthält (31), der sich am Ende des zweiten Elektrokabels befindet(5a) sowie ein Monoblock-Zentralmodul (20) mit einem längsgerichtetem Durchgangsloch (25), geeignet zur Aufnahme - auf einer ersten Fläche (A) - das Steckerelement und auf einer zweiten Fläche (B) die Verbindungsbuchse, sodass der Kontaktstift des Steckerelementes ausgerichtet ist auf die Kontaktfassung der Verbindungsbuchse, um für eine elektrische Verbindung zwischen beiden Verbindungselementen zu sorgen (30, 40), die sich dadurch auszeichnet, dass das Zentralmodul (20) eine wesentlich rohrförmige zentrale Position umfasst (21) und somit die erste Fläche (A), die mit Aussparungen versehen ist, mit der zweiten Fläche (B), identisch zur ersten Fläche, verbindet.

2. Verbindungssysteme gemäß Anspruch 1, bei dem jede Fläche (A, B) des Zentralmoduls (20) mindestens eine seitliche Aussparung hat (22a, 22b) sowie eine Aussparung an der Vorderseite (21a, 21b), die dazu dient, ein Verriegelungselement aufzunehmen.

3. Verbindungssystem gemäß unserer Ansprüche 1 oder 2, bei dem beide der Buchsen (40) und der Stecker (30) eine Dämmschale (60) enthalten, welche einen elektrischen Kontakt abdeckt, entweder die Buchse (41) oder den Stecker (31), und die Dämmschale teilweise in eine der Flächen des Zentralmoduls (20) eingeführt werden kann.

4. Verbindungssystem gemäß Anspruch 3, bei dem die Dämmschale (60) des Steckers (30) und die Dämmschale (60) der Buchse (40) identisch sind.

5. Verbindungssystem gemäß Anspruch 3 oder 4, bei dem die Dämmschale (60) folgendes enthält:
Einen äußeren Bereich (61), durch den das Elektrokabel hindurchgeht,
einen Verriegelungsbereich (62), der mindestens ein Verriegelungselement hat, welches in die Aussparung an der Vorderseite und die seitliche Aussparung des Zentralmoduls eingeführt werden kann,
eine abdichtende Barriere (64), welche Kontaktfassung und Kontaktstift innerhalb des Zentralmoduls abdichtet,
einen inneren Teil (65) zum Schutz dieser beiden Kontakte.

6. Verbindungssystem gemäß Anspruch 4 oder 5, bei dem die Dämmschale (60) einen rohrförmigen Beriech (67) enthält, der ein Elektrokabel empfangen und halten kann, wobei der rohrförmige Bereich um das besagte Kabel herum mit einem Klemmstück (50) befestigt werden kann.

7. Verbindungssystem gemäß Anspruch 1 bis 6, wobei das Zentralmodul (20) über Befestigungsmittel (24) verfügt, um das besagte Zentralmodul an einer Außenschiene zu befestigen.

8. Verbindungssysteme gemäß Anspruch 3 bis 7, die über mindestens eine Schutzkappe (70) verfügen, welche teilweise um die Dämmschale (60) der Buchse oder des Steckers herum installiert werden kann, um den Kontaktstift oder die Kontaktfassung zu schützen, bevor das Verbindungselement ins Zentralmodul installiert wird.

9. Verbindungsystem gemäß Anspruch 7 und 8, wobei die Schutzkappe (70) über mindestens eine Aussparung an der Vorderseite und einer seitlichen Aussparung (73) verfügt, und zwar um das Verriegelungselement der Dämmschale empfangen zu können.

10. Verbindungssystem gemäß Anspruch 1 bis 9, wobei das Zentralmodul aus gegossenem Thermoplast besteht.

11. Verbindungssystem gemäß Anspruch 3 bis 10, wobei die Dämmschale aus Elastomer gegossen wurde.

12. Kabelsatz zum Verbinden des elektrischen Zubehörs. Es enthält mindestens ein Verbindungssystem gemäß der Ansprüche 1 bis 11.

## Claims

1. A one-way connection system comprising a female connecting element (40) and a male connecting element (30), the female connecting element including a female contact (41) mounted at the end of a first electrical cable (5b), the male connecting element including a male contact (31) mounted at the end of a second electrical cable (5a), further comprising a monoblock central module (20) with a longitudinal through hole (25), adapted to receive, on a first face (A), the male connecting element and, on a second face (B), the female connecting element, so that the male contact of the male connecting element is aligned with the female contact of the female connecting element for providing an electrical connection between the two connection elements (30, 40), **characterized in that** the central module (20) includes a substantially tubular central portion (21) connecting the first face (A), which is provided with cutouts, and the second face (B), identical to the first face.

2. Connecting system according to claim 1, wherein each face (A, B) of the central module (20) includes at least one lateral cutout (22a, 22b) and a front cutout (21a, 21b) intended to receive a locking element.

3. Connecting system according to any one of claims 1 or 2, wherein each one of the female connecting element (40) and the male connecting element (30) includes an insulating case (60) covering an electrical contact, respectively female (41) and male (31), this insulating case being able to be partially inserted into one of the faces of the central module (20).

4. Connecting system according to claim 3, wherein the insulating case (60) of the male connecting element (30) and the insulating case (60) of the female connecting element (40) are identical.

5. Connecting system according to claim 3 or claim 4, wherein the insulating case (60) includes:
An outer portion (61) through which passes the electrical cable
a locking portion (62) provided with at least one locking element that can be introduced into the front cutout and the side cutout of the central module,
a sealing barrier (64) sealing the male or female contact inside the central module,
an inner part (65) for protecting the male or female contact.

6. Connecting system according to claim 4 or claim 5, wherein the insulating case (60) includes a tubular portion (67) that can receive and hold the electrical cable, this tubular portion being fastened around said cable by means of a clamping clip (50).

7. Connecting system according to any one of claims 1 to 6, wherein the central module (20) includes fastening means (24) for fixing said central module on an outer rail.

8. Connecting system according to any one of claims 3 to 7, including at least one protective cap (70) able to be installed partially around the insulating case (60) of the male connection element or the connection element female to protect the male or female contact, before the installation of the connecting element in the central module.

9. Connecting system according to claims 7 and 8, wherein the protective cap (70) has at least one front cutout and one side cutout (73) for receiving the locking element of the insulating case.

10. Connecting system according to any one of claims 1 to 9, wherein the central module is made of molded thermoplastic.

11. Connecting system according to any one of claims 3 to 10, wherein the insulating case is molded from an elastomer.

12. Cable harness for connecting electrical equipment, **characterized in that** it includes at least one connecting system according to any one of claims 1 to 11.
